# EUROPEAN PATENT APPLICATION

(11) **EP 4 507 379 A1**
(43) Date of publication of application: **12.02.2025**
(21) Application number: 23791355.3
(22) Date of filing: 21.04.2023
(51) Int. Cl.: H04W 36/00

(54) **INFORMATION REPORTING METHOD AND APPARATUS, TERMINAL, BASE STATION, AND STORAGE MEDIUM**

(30) Priority: 21.04.2022 CN 202210425591
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HU, Nan, Beijing 100032 (CN); CHEN, Ningyu, Beijing 100032 (CN)
(74) Representative: J A Kemp LLP
(86) International application number: PCT/CN2023/089788
(87) International publication number: WO 2023/202703

(57) **Abstract**

Disclosed in the present disclosure are an information reporting method and apparatus, a terminal, a base station, and a storage medium. The method comprises: a first terminal sends a first message to a first base station, wherein the first message carries related information representing that the first terminal performs switching based on a Layer-1, Layer-2, or Layer-3 measurement result.

## Description

### CROSS-REFERENCE TO RELATED APPLICATIONS

The present disclosure claims the priority to Chinese Patent Application No. 202210425591.1 filed in China on April 21, 2022, the entire content of which is incorporated herein by reference.

### TECHNICAL FIELD

The present disclosure relates to the field of wireless techniques, and in particular, to an information reporting method and apparatus, a terminal, a base station, and a storage medium.

### BACKGROUND

In the related art, a terminal performs a handover based on a layer-3 (L3) measurement result, that is, layer-3 filtering has to be applied to the measurement result reported by the terminal, which results in low handover efficiency of the terminal.

### SUMMARY

In order to solve the related technical problems, embodiments of the present disclosure provide an information reporting method and apparatus, a terminal, a base station, and a storage medium.

The technical solutions in the embodiments of the present disclosure are implemented as follows.

The embodiments of the present disclosure provide an information reporting method, applied to a first terminal. The method includes sending a first message to a first base station. The first message carries information related to a handover performed by the first terminal based on a layer-1 or layer-2 or layer-3 measurement result.

In the above solution, the first message is sent when or after a first event occurs, and the first event includes at least one of the following:
a handover success;
a radio link failure (RLF);
random access;
a conditional handover; or
a dual stack handover.

In the above solution, the first message includes at least one of the following: a measurement report, a handover success message, an RLF message, or a random access report.

In the above solution, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating a number of times for which the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating a number of times for which the layer-1 or layer-2 measurement result satisfies the corresponding handover threshold within the second duration.

In the above solution, the method further includes receiving a second message sent by the first base station,. The second message carries information indicating a layer-1 and/or layer-2 measurement configuration.

In the above solution, the second message includes a radio resource control (RRC) message.

In the above solution, the information carried in the second message includes at least one of the following:
a layer-1 or layer-2 measurement object, comprising a frequency and/or a cell to be measured;
indication information for a terminal to report the layer-1 or layer-2 measurement result;
a handover configuration based on the layer-1 or layer-2 measurement result; or
configuration information of at least one candidate cell.

In the above solution, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

In the above solution, the method further includes performing a handover based on the layer-1 or layer-2 measurement result.

The embodiments of the present disclosure further provide a measurement configuration method, applied to a first base station. The method includes receiving a first message sent by a first terminal. The first message carries information related to a handover performed by the first terminal based on a layer-1 or layer-2 or layer-3 measurement result.

In the above solution, the first message includes at least one of the following: a measurement report, a handover success message, an RLF message, or a random access report.

In the above solution, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times for which the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times for which the layer-1 or layer-2 measurement result satisfies the corresponding handover threshold within the second duration.

In the above solution, the method further includes sending a second message to the first terminal. The second message carries information indicating a layer-1 and/or layer-2 measurement configuration.

In the above solution, the second message includes an RRC message.

In the above solution, the information carried in the second message includes at least one of the following:
a layer-1 or layer-2 measurement object, comprising a frequency and/or a cell to be measured;
indication information for a terminal to report the layer-1 or layer-2 measurement result;
a handover configuration based on the layer-1 or layer-2 measurement result; or
configuration information of at least one candidate cell.

In the above solution, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

The embodiments of the present disclosure further provide an information reporting apparatus, comprising:
a first sending unit, configured to send a first message to a first base station, wherein
the first message carries information related to a handover performed by the first terminal based on a layer-1 or layer-2 or layer-3 measurement result.

The embodiments of the present disclosure further provide a measurement configuration apparatus, comprising:
a first receiving unit, configured to receive a first message sent by a first terminal, wherein
the first message carries information related to a handover performed by the first terminal based on a layer-1 or layer-2 or layer-3 measurement result.

The embodiments of the present disclosure further provide a first terminal, comprising: a first processor and a first communication interface, wherein
the first communication interface is configured to send a first message to a first base station, wherein
the first message carries information related to a handover performed by the first terminal based on a layer-1 or layer-2 or layer-3 measurement result.

The embodiments of the present disclosure further provide a first base station, comprising: a second processor and a second communication interface, wherein
the second communication interface is configured to receive a first message sent by a first terminal, wherein
the first message carries information related to a handover performed by the first terminal based on a layer-1 or layer-2 or layer-3 measurement result.

The embodiments of the present disclosure further provide a first terminal, comprising: a first processor and a first memory configured to store a computer program that can be run on a processor,
wherein when the first processor is configured to run the computer program, the first processor performs the steps of the method according to any one on the first terminal side.

The embodiments of the present disclosure further provide a first base station, comprising: a second processor and a second memory configured to store a computer program that can be run on a processor,
wherein when the second processor is configured to run the computer program, the second processor performs the steps of the method according to any one on the first base station side.

The embodiments of the present disclosure further provide a storage medium, having a computer program stored thereon, wherein when executed by a processor, the computer program implements the steps of any method on the first terminal side, or implements the steps of any method on the first base station side.

The embodiments of the present disclosure provide an information reporting method and apparatus, a terminal, a base station, and a storage medium. A first terminal sends a first message to a first base station, and the first message carries information related to a handover performed by the first terminal based on a layer-1 or layer-2 or layer-3 measurement result. In the above solution, the first base station can acquire information related to the handover performed by the first terminal based on the layer-1 or layer-2 or layer-3 measurement result. The information can be used by the first base station to perform handover configuration for the first terminal, so that the first terminal can perform the handover based on the layer-1 or layer-2 or layer-3 measurement result. When the handover is performed based on the layer-1 measurement result, the first terminal can be avoided from performing layer-3 filtering on the measurement result, thereby improving handover efficiency of the terminal.

### BRIEF DESCRIPTION OF THE DRAWINGS

FIG. 1 is a schematic flowchart of an information reporting method according to an embodiment of the present disclosure;
FIG. 2 is a schematic flowchart of another information reporting method according to an embodiment of the present disclosure;
FIG. 3 is a schematic structural diagram of an information reporting apparatus according to an embodiment of the present disclosure;
FIG. 4 is a schematic structural diagram of another information reporting apparatus according to an embodiment of the present disclosure;
FIG. 5 is a schematic structural diagram of a first terminal according to an embodiment of the present disclosure; and
FIG. 6 is a schematic structural diagram of a first base station according to an embodiment of the present disclosure.

### DETAILED DESCRIPTION

In the related art, a terminal performs a handover based on a layer-3 (L3) measurement result. That is, after the terminal performs layer-3 filtering on a signal strength measurement result, in the case that a configured event is satisfied, the terminal reports it to a network side. The network side sends handover signaling to the terminal, and then the terminal performs the handover. Layer-3 filtering needs to be performed in the above handover procedure, thereby affecting handover efficiency of the terminal.

On that basis, in various embodiments of the present disclosure, a first terminal sends a first message to a first base station, and the first message carries information related to a handover performed by the first terminal based on a layer-1 or layer-2 or layer-3 measurement result. In the above solution, the first base station can acquire information related to the handover performed by the first terminal based on the layer-1 or layer-2 or layer-3 measurement result. The information can be used by the first base station to perform handover configuration for the first terminal, so that the first terminal can perform the handover based on the layer-1 or layer-2 or layer-3 measurement result. When the handover is performed based on the layer-1 measurement result, the first terminal can be avoided from performing layer-3 filtering on the measurement result, thereby improving handover efficiency of the terminal.

The present disclosure will be described in further detail below with reference to the accompanying drawings and embodiments.

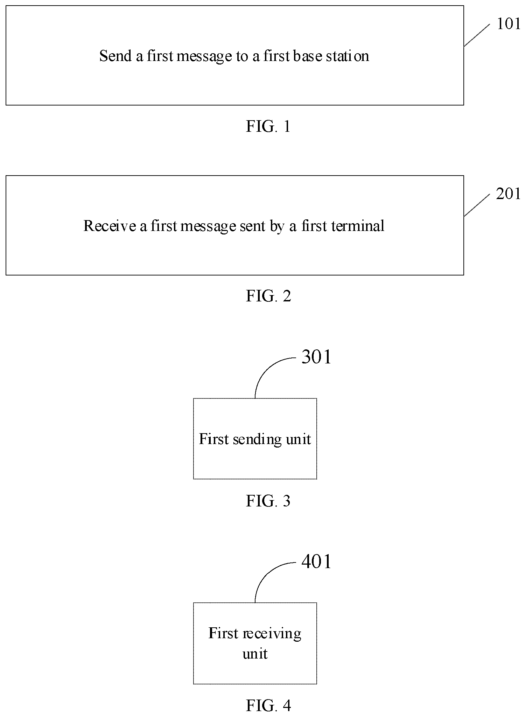

In the embodiments of the present disclosure, a solution in which a terminal performs a handover based on a layer-1 measurement result is introduced. It should be noted that the layer-1 measurement result refers to a measured value acquired at a physical layer by measuring a reference signal, for example, reference signal receiving power (RSRP) acquired via measurement. In the related art, the layer-3 measurement result refers to a measurement result that is acquired by performing layer-3 filtering on the layer-1 measurement result, which is smoother and more stable than the layer-1 measurement result. That is, the layer-1 measurement result may include a large fluctuation, or may include an extremely large or small abnormal value, while the layer-3 measurement result is more stable due to the layer-3 filtering. Therefore, considering the possibility that the layer-1 measurement result includes a large fluctuation, in the embodiments of the present disclosure, the first terminal needs to report, to the first base station, the indication information related to the handover performed by the first terminal based on the layer-1 or layer-2 or layer-3 measurement result. The information may help the first base station to determine whether the first terminal performs the handover based on the layer-1 measurement result or the layer-3 measurement result, and may be used to optimize the handover configuration of the first terminal. Based on the above consideration, an embodiment of the present disclosure provides an information reporting method, which is applied to a first terminal. As shown in FIG. 1, the method includes the following steps.

At Step 101, a first message is sent to a first base station.

The first message carries information related to a handover performed by the first terminal based on a layer-1 or layer-2 or layer-3 measurement result.

In an embodiment, the first message is sent when or after a first event occurs, and the first event includes at least one of the following:
a handover success;
an RLF;
random access;
a conditional handover; or
a dual stack handover.

Here, the first event serves as a trigger condition for sending the first message, and the first message is sent when the first event occurs or after the first event occurs. The first message includes at least one of the following:
a measurement report, a handover success message, an RLF message, or a random access report.

In practical applications, the corresponding first message is sent according to the first event. For example, if the first terminal performs the handover successfully based on the layer-1 measurement result, the first terminal sends a handover success message to the first base station, and the handover success message carries information related to the handover performed by the first terminal based on the layer-1 measurement result. Alternatively, if an RLF occurs in a process in which the first terminal performs the handover based on the layer-1 measurement result, the first terminal sends an RLF message to the first base station, and the RLF message carries information related to the handover performed by the first terminal based on the layer-1 measurement result.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

It is further understood that the layer-1 or layer-2 measurement result refers to a layer-1 or layer-2 measurement result of RSRP, reference signal receiving quality (RSRQ), and/or a signal to interference plus noise ratio (SINR) of a certain cell or beam. The layer-3 measurement result refers to a layer-1 or layer-3 measurement result of RSRP, RSRQ, and/or an SINR of a certain cell or beam. The information indicating that the handover is triggered based on the layer-1 or layer-2 measurement result is used to indicate that the first message carries information related to the handover triggered by the first terminal based on the layer-1 or layer-2 measurement result. The information indicating that the handover is triggered based on the layer-3 measurement result is used to indicate that the first message carries information related to the handover triggered by the first terminal based on the layer-3 measurement result. The first number of times refers to the total number of times for which the layer-1 or layer-2 measurement result satisfies the corresponding handover threshold from the first time the layer-1 or layer-2 measurement result satisfies the corresponding handover threshold to an occurrence of an RLF. The first duration refers to a duration from the first time the layer-1 or layer-2 measurement result satisfies the corresponding handover threshold to the last time the layer-1 or layer-2 measurement result satisfies the corresponding handover threshold. The second duration refers to a duration from the first time the layer-1 or layer-2 measurement result satisfies the corresponding handover threshold to an occurrence of an RLF, and is used by the first base station to determine whether a third duration is configured to be so long that a handover to a target cell cannot be performed in time although the measurement result satisfies the corresponding handover threshold. Here, the third duration is configured by the first base station to the first terminal, and is used to indicate the first terminal to trigger a handover when a duration in which the layer-1 or layer-2 measurement result satisfies the corresponding handover threshold reaches the third duration. The second number of times refers to the total number of times for which the layer-1 or layer-2 measurement result satisfies the corresponding handover threshold from the first time the layer-1 or layer-2 measurement result satisfies the corresponding handover threshold to an occurrence of an RLF, and is used by the first base station to determine whether a third number of times is configured to be so large that the first terminal is not handed over to a target cell in time. Here, the third number of times is configured by the first base station for the first terminal, and is used to indicate the first terminal to trigger a handover when the number of times for which the layer-1 or layer-2 measurement result satisfies the corresponding handover threshold reaches the third number of times.

The information carried in the first message may help the first base station to determine whether the first terminal performs the handover based on the layer-1 measurement result or the layer-3 measurement result, and may be used to optimize a handover configuration of the first terminal. For example, when an RLF occurs, the first base station may determine, according to the information carried in the first message, whether the handover resulting in the RLF is performed based on the layer-1 measurement result, or based on the layer-2 measurement result, or based on the layer-3 measurement result, so that the cause of the RLF can be accurately determined. As another example, by using the information in the first message such as the first duration, the first number of times, the second duration, and/or the second number of times, the first base station can determine the time when the RLF occurs. For example, the first base station may precisely determine that the RLF occurs when the first terminal receives the handover configuration from the first base station but does not initiate the handover, or when the measurement result satisfies the corresponding handover threshold but the corresponding third duration or third number of times is not satisfied, or after the first terminal triggers the handover based on the layer-1 measurement result, or after the handover based on the layer-1 measurement result is completed. In this way, the first base station may further adjust the handover configuration for the first terminal, and issue the updated handover configuration via a second message.

In an embodiment, the method further includes:
receiving a second message sent by the first base station.

The second message carries information indicating a layer-1 and/or layer-2 measurement configuration.

In practical applications, the second message may be issued before the first message is sent to the first base station or after the first terminal sends the first message to the first base station, and is used to adjust the handover configuration. In an embodiment, the second message includes an RRC message. That is, the first base station sends the measurement configuration to the first terminal via an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; or
configuration information of at least one candidate cell.

It is further understood that the layer-1 or layer-2 measurement object is used to indicate a frequency and/or a cell to be measured by the first terminal. The indication information for the terminal to report the layer-1 or layer-2 measurement result is used to indicate whether the layer-1 measurement result or the layer-2 measurement result is to be reported by the first terminal to the first base station. The configuration information of at least one candidate cell includes system information and/or a random access configuration of each candidate cell. The configuration of the candidate cell is sent to the first terminal in advance, so that the reliability of the handover can be ensured. That is, even if the first terminal is disconnected from the target cell, the first terminal can reestablish a connection to the target cell in time according to the configurations of the plurality of candidate cells.

The handover configuration based on the layer-1 or layer-2 measurement result includes at least the handover threshold corresponding to layer 1 or the handover threshold corresponding to layer 2. Specifically, it means that the first terminal compares the corresponding handover threshold with the layer-1 measurement result, and determines, according to a comparison, whether to perform the handover based on the layer-1 measurement result, or determines, according to the comparison, whether to report the layer-1 measurement result to the first base station. Alternatively, it means that the first terminal compares the corresponding handover threshold with the layer-2 measurement result, and determines, according to a comparison, whether to perform the handover based on the layer-2 measurement result, or determines, according to the comparison, whether to report the layer-2 measurement result to the first base station.

In addition, the handover configuration based on the layer-1 or layer-2 measurement result further includes:
a third number of times indicating the first terminal to trigger a handover when a number of times for which the layer-1 or layer-2 measurement result satisfies the corresponding handover threshold reaches the third number of times; and
a third duration indicating the first terminal to trigger a handover when a duration in which the layer-1 or layer-2 measurement result satisfies the corresponding handover threshold reaches the third duration.

Here, the third number of times and the third duration are configured in consideration of the fluctuation in the layer-1 or layer-2 measurement result. That is, only if the layer-1 or layer-2 measurement result satisfies the corresponding handover threshold for a plurality of times, the handover is triggered, thereby ensuring the reliability of the handover.

In an embodiment, the method further includes:
performing a handover based on the layer-1 or layer-2 measurement result.

In practical applications, the first terminal may perform layer-1 or layer-2 measurement based on the measurement configuration issued by the first base station via the second message. When the layer-1 or layer-2 measurement result satisfies the corresponding handover threshold in the measurement configuration, or further satisfies the third number of times and/or the third duration in the measurement configuration, the first terminal initiates the handover to the corresponding target cell. Alternatively, when the layer-1 or layer-2 measurement result satisfies the corresponding handover threshold in the measurement configuration, or further satisfies the third number of times and/or the third duration in the measurement configuration, the first terminal sends a measurement report to the first base station, and the measurement report carries the layer-1 or layer-2 measurement result. It should be noted that, in the above process, an RLF may occur when the first terminal performs the layer-1 or layer-2 measurement or reports the layer-1 or layer-2 measurement result. When the handover is performed based on the layer-1 or layer-2 measurement result, the first terminal initiates random access to the target cell. If the random access succeeds, the first terminal sends a handover success message to the first base station. If the random access fails, for example, an RLF occurs in a random access procedure, the first terminal sends an RLF message to the first base station.

The above solution is applicable to both a conditional handover and a base station handover. The conditional handover means that the first base station configures a condition corresponding to the handover for the first terminal,, and when the measurement result of the first terminal satisfies the configured condition, the first terminal triggers the handover. The base station handover means that the first base station configures a condition corresponding to reporting for the first terminal, and when the measurement result of the first terminal satisfies the configured condition, the first terminal reports the measurement result, and the first base station indicates, according to the measurement result reported by the first terminal, to the first terminal whether to perform the handover.

Correspondingly, an embodiment of the present disclosure further provides an information reporting method, which is applied to a first base station. As shown in FIG. 2, the method includes:
At Step 201, a first message sent by a first terminal is received.

The first message carries information related to a handover performed by the first terminal based on a layer-1 or layer-2 or layer-3 measurement result.

In an embodiment, the first message is sent when or after a first event occurs, and the first event includes at least one of the following:
a handover success;
an RLF;
random access;
a conditional handover; or
a dual stack handover.

Here, the first event serves as a trigger condition for sending the first message, and the first message is sent when the first event occurs or after the first event occurs. The first message includes at least one of the following:
a measurement report, a handover success message, an RLF message, or a random access report.

In practical applications, the corresponding first message is sent according to the first event. For example, if the first terminal performs the handover successfully based on the layer-1 measurement result, the first terminal sends a handover success message to the first base station, and the handover success message carries information related to the handover performed by the first terminal based on the layer-1 measurement result. Alternatively, if an RLF occurs in a process in which the first terminal performs the handover based on the layer-1 measurement result, the first terminal sends an RLF message to the first base station, and the RLF message carries information related to the handover performed by the first terminal based on the layer-1 measurement result.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

The information carried in the first message may help the first base station to determine whether the first terminal performs the handover based on the layer-1 measurement result or the layer-3 measurement result, and may be used to optimize a handover configuration of the first terminal. For example, when an RLF occurs, the first base station may determine, according to the information carried in the first message, whether the handover resulting in the RLF is performed based on the layer-1 measurement result, or the layer-2 measurement result, or the layer-3 measurement result, so that the cause of the RLF can be accurately determined. As another example, by using the information in the first message such as the first duration, the first number of times, the second duration, and/or the second number of times, the first base station can determine the time when the RLF occurs. For example, the first base station may precisely determine that the RLF occurs when the first terminal receives the handover configuration from the first base station but does not initiate the handover, or when the measurement result satisfies the corresponding handover threshold but the corresponding third duration or third number of times is not satisfied, or after the first terminal triggers the handover based on the layer-1 measurement result, or after the handover based on the layer-1 measurement result is completed. In this way, the first base station may further adjust the handover configuration for the first terminal, and issue the updated handover configuration via a second message.

In an embodiment, the method further includes:
sending a second message to the first terminal, wherein
the second message carries information indicating a layer-1 and/or layer-2 measurement configuration.

In practical applications, the second message may be issued before the first message is sent to the first base station or after the first terminal sends the first message to the first base station, and is used to adjust the handover configuration.

In an embodiment, the second message includes an RRC message. That is, the first base station sends the measurement configuration to the first terminal via an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; or
configuration information of at least one candidate cell.

It is further understood that the layer-1 or layer-2 measurement object is used to indicate a frequency and/or a cell to be measured by the first terminal. The indication information for the terminal to report the layer-1 or layer-2 measurement result, is used to indicate whether the layer-1 measurement result or the layer-2 measurement result is to be reported by the first terminal to the first base station. The configuration information of at least one candidate cell includes system information and/or a random access configuration of each candidate cell. The configuration of the candidate cell is sent to the first terminal in advance, so that the reliability of the handover can be ensured. That is, even if the first terminal is disconnected from the target cell, the first terminal can reestablish a connection to the target cell in time according to the configurations of the plurality of candidate cells.

The handover configuration based on the layer-1 or layer-2 measurement result includes at least the handover threshold corresponding to layer 1 or the handover threshold corresponding to layer 2. Specifically, it means that the first terminal compares the corresponding handover threshold with the layer-1 measurement result, and determines, according to the comparison, whether to perform the handover based on the layer-1 measurement result, or determines, according to the comparison, whether to report the layer-1 measurement result to the first base station. Alternatively, it means that the first terminal compares the corresponding handover threshold with the layer-2 measurement result, and determines, according to a comparison, whether to perform the handover based on the layer-2 measurement result, or determines, according to the comparison, whether to report the layer-2 measurement result to the first base station.

In addition, the handover configuration based on the layer-1 or layer-2 measurement result further includes:
a third number of times indicating the first terminal to trigger a handover when a number of times for which the layer-1 or layer-2 measurement result satisfies the corresponding handover threshold reaches the third number of times; and
a third duration indicating the first terminal to trigger a handover when a duration in which the layer-1 or layer-2 measurement result satisfies the corresponding handover threshold reaches the third duration.

Here, the third number of times and the third duration are configured in consideration of the fluctuation of the layer-1 or layer-2 measurement result. That is, only when the layer-1 or layer-2 measurement result satisfies the corresponding handover threshold for a plurality of times, the handover is triggered, thereby ensuring the reliability of the handover.

The above solution is applicable to both a conditional handover and a base station handover. The conditional handover means that the first base station configures a condition corresponding to the handover for the first terminal, and when the measurement result of the first terminal satisfies the configured condition, the first terminal triggers the handover. The base station handover means that the first base station configures a condition corresponding to reporting for the first terminal,, and when the measurement result of the first terminal satisfies the configured condition, the first terminal reports the measurement result, and the first base station indicates according to the measurement result reported by the first terminal, to the first terminal whether to perform the handover.

In the above solution, in the case that the first terminal determines, according to the configuration included by the first base station in the second message and the layer-1 or layer-2 measurement result, that the layer-1 or layer-2 measurement result needs to be reported to the first base station, the first terminal carries the layer-1 or layer-2 measurement result in the first message, and sends the first message to the first base station. In this way, the first terminal triggers the reporting of the measurement result based on the layer-1 or layer-2 measurement result, and further triggers the handover based on the reporting. Compared with the related art in which the layer-3 measurement result needs to be reported or the handover needs to be triggered based on the layer-3 measurement result, the present invention has a higher handover speed and can avoid a handover failure caused by an overly long time required for the layer-3 measurement.

In order to implement the information reporting method on the first terminal side of the embodiments of the present disclosure, the embodiments of the present disclosure further provide an information reporting apparatus provided on a first terminal. As shown in FIG. 3, the apparatus includes:
a first sending unit 301, configured to send a first message to a first base station, wherein
the first message carries information related to a handover performed by the first terminal based on a layer-1 or layer-2 or layer-3 measurement result.

In an embodiment, the first message is sent when or after a first event occurs, and the first event includes at least one of the following:
a handover success;
an RLF;
random access;
a conditional handover; or
a dual stack handover.

In an embodiment, the first message includes at least one of the following:
a measurement report, a handover success message, an RLF message, or a random access report.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

In an embodiment, the apparatus further includes:
a second receiving unit, configured to receive a second message sent by the first base station, wherein
the second message carries information indicating a layer-1 and/or layer-2 measurement configuration.

In an embodiment, the second message includes an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; or
configuration information of at least one candidate cell.

In an embodiment, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

In an embodiment, the apparatus further includes:
a handover unit, configured to perform a handover based on the layer-1 or layer-2 measurement result.

In practical applications, the first sending unit 301 and the second receiving unit may be implemented by a communication interface in the information reporting apparatus. The handover unit may be implemented by a processor plus a communication interface in the information reporting apparatus.

In order to implement the information reporting method on the first base station side of the embodiments of the present disclosure, the embodiments of the present disclosure further provide an information reporting apparatus provided on a first base station. As shown in FIG. 4, the apparatus includes:
a first receiving unit 401, configured to receive a first message sent by a first terminal, wherein
the first message carries information related to a handover performed by the first terminal based on a layer-1 or layer-2 or layer-3 measurement result.

In an embodiment, the first message includes at least one of the following:
a measurement report, a handover success message, an RLF message, or a random access report.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

In an embodiment, the apparatus further includes:
a second sending unit, configured to send a second message to the first terminal, wherein
the second message carries information indicating a layer-1 and/or layer-2 measurement configuration.

In an embodiment, the second message includes an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; and
configuration information of at least one candidate cell.

In an embodiment, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

In practical applications, the first receiving unit 401 and the second sending unit may be implemented by a communication interface in the information reporting apparatus.

It should be noted that: for the information reporting apparatus provided in the above embodiments, when information reporting is performed, the division of the above program modules is merely used as an example for description. In practical applications, the above processing can be allocated to different program modules for completion according to needs, that is, the internal structure of the apparatus is divided into different program modules to accomplish all or part of the processing described above. In addition, the information reporting apparatus and method embodiments provided in the above embodiments belong to the same concept. For a specific implementation process of the apparatus, refer to the method embodiments for details, which will not be repeated herein.

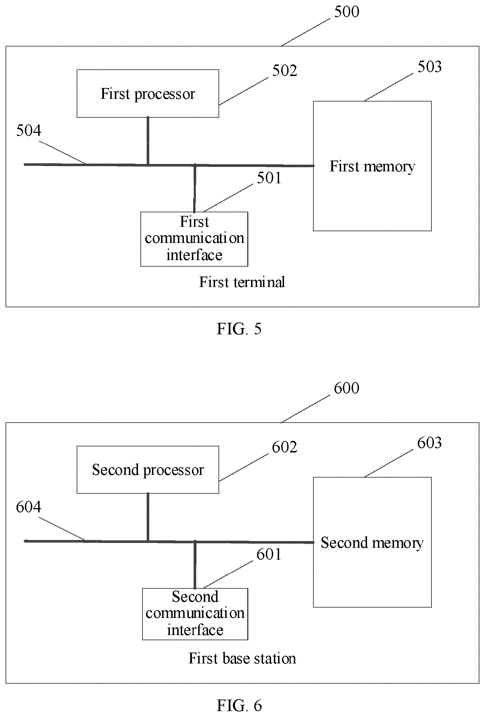

Based on hardware implementation of the above program modules and in order to implement the method on the first terminal side of the embodiments of the present disclosure, the embodiments of the present disclosure further provide a first terminal. As shown in FIG. 5, the first terminal 500 includes a first communication interface 501 and a first processor 502.

The first communication interface 501 is capable of exchanging information with other network nodes.

The first processor 502 is connected to the first communication interface 501 to exchange information with the other network nodes, and configured to, when running a computer program, perform the method provided in one or more technical solutions on the first terminal side. The computer program is stored in a first memory 503.

Specifically, the first communication interface 501 is configured to send a first message to a first base station, wherein
the first message carries information related to a handover performed by the first terminal based on a layer-1 or layer-2 or layer-3 measurement result.

In an embodiment, the first message is sent when or after a first event occurs, and the first event includes at least one of the following:
a handover success;
an RLF;
random access;
a conditional handover; or
a dual stack handover.

In an embodiment, the first message includes at least one of the following:
a measurement report, a handover success message, an RLF message, or a random access report.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

In an embodiment, the first communication interface 501 is further configured to:
receive a second message sent by the first base station, wherein
the second message carries information indicating a layer-1 and/or layer-2 measurement configuration.

In an embodiment, the second message includes an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; or
configuration information of at least one candidate cell.

In an embodiment, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

In an embodiment, the first communication interface 501 and the first processor 502 are combined, and are further configured to:
perform a handover based on the layer-1 or layer-2 measurement result.

It should be noted that: specific processing processes of the first processor 502 and the first communication interface 501 may be understood with reference to the above method.

Certainly, in practical applications, various assemblies in the first terminal 500 are coupled together by means of a bus system 504. It can be understood that the bus system 504 is configured to implement the connection and communication between these assemblies. The bus system 504 includes, in addition to a data bus, a power supply bus, a control bus, and a status signal bus. However, for the sake of clear illustration, various buses are all designated as the bus system 504 in FIG. 5.

The first memory 503 in the embodiments of the present disclosure is configured to store various types of data to support operations of the first terminal 500. Examples of the data include: any computer program operating on the first terminal 500.

The method disclosed in the embodiments of the present disclosure described above may be applied to the first processor 502, or implemented by the first processor 502. The first processor 502 may be an integrated circuit chip having a signal processing capability. During implementation, each step in the method described above may be completed by an integrated logic circuit of hardware in the first processor 502 or instructions in the form of software. The first processor 502 described above may be a general-purpose processor, a Digital Signal Processor (DSP), or other programmable logic devices, a discrete gate or transistor logic device, a discrete hardware component, or the like. The various methods, steps, and logical block diagrams disclosed in the embodiments of the present disclosure may be implemented or executed by the first processor 502. The general-purpose processor may be a microprocessor, any conventional processor or the like. The steps of the methods disclosed with reference to the embodiments of the present disclosure may be directly embodied as hardware and executed and completed by a decoding processor, or executed and completed by a combination of hardware and software modules in the decoding processor. The software modules may be located in a storage medium. The storage medium is located in the first memory 503, and the first processor 502 reads the information in the first memory 503, and completes the steps of the aforementioned method in combination with its hardware.

In an exemplary embodiment, the first terminal 500 may be implemented by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), microprocessors, or other electronic components, and is configured to perform the aforementioned method.

Based on hardware implementation of the above program modules and in order to implement the method on the first base station side of the embodiments of the present disclosure, the embodiments of the present disclosure further provide a first base station. As shown in FIG. 6, the first base station 600 includes a second communication interface 601 and a second processor 602.

The second communication interface 601 is capable of exchanging information with other network nodes.

The second processor 602 is connected to the second communication interface 601 to exchange information with the other network nodes, and configured to, when running a computer program, perform the method provided in one or more technical solutions on the first base station side. The computer program is stored in a second memory 603.

Specifically, the second communication interface 601 is configured to receive a first message sent by a first terminal.

The first message carries information related to a handover performed by the first terminal based on a layer-1 or layer-2 or layer-3 measurement result.

In an embodiment, the first message includes at least one of the following:
a measurement report, a handover success message, an RLF message, or a random access report.

In an embodiment, the information carried in the first message includes at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating the number of times the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating the number of times the layer-1 or layer-2 measurement result satisfies the corresponding handover threshold within the second duration.

In an embodiment, the second communication interface 601 is further configured to:
send a second message to the first terminal, wherein
the second message carries information indicating a layer-1 and/or layer-2 measurement configuration.

In an embodiment, the second message includes an RRC message.

In an embodiment, the information carried in the second message includes at least one of the following:
a layer-1 or layer-2 measurement object, including a frequency and/or a cell to be measured;
indication information for a terminal to report the layer-1 or layer-2 measurement result;
a handover configuration based on the layer-1 or layer-2 measurement result; or
configuration information of at least one candidate cell.

In an embodiment, the handover configuration based on the layer-1 or layer-2 measurement result includes at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

It should be noted that: specific processing processes of the second processor 602 and the second communication interface 601 may be understood with reference to the above method.

Certainly, in practical applications, various assemblies in the first base station 600 are coupled together by means of a bus system 604. It can be understood that the bus system 604 is configured to implement the connection and communication between these assemblies. The bus system 604 includes, in addition to a data bus, a power supply bus, a control bus, and a status signal bus. However, for the sake of clear illustration, various buses are all designated as the bus system 604 in FIG. 6.

The second memory 603 in the embodiments of the present disclosure is configured to store various types of data to support operations of the first base station 600. Examples of the data include: any computer program operating on the first base station 600.

The method disclosed in the embodiments of the present disclosure described above may be applied to the second processor 602, or implemented by the second processor 602. The second processor 602 may be an integrated circuit chip having a signal processing capability. During implementation, each step in the method described above may be completed by an integrated logic circuit of hardware in the second processor 602 or instructions in the form of software. The second processor 602 described above may be a general-purpose processor, a DSP, or other programmable logic devices, a discrete gate or transistor logic device, a discrete hardware component, or the like. The various methods, steps, and logical block diagrams disclosed in the embodiments of the present disclosure may be implemented or executed by the second processor 602. The general-purpose processor may be a microprocessor, any conventional processor or the like. The steps of the methods disclosed with reference to the embodiments of the present disclosure may be directly embodied as hardware and executed and completed by a decoding processor, or executed and completed by a combination of hardware and software modules in the decoding processor. The software modules may be located in a storage medium. The storage medium is located in the second memory 603, and the second processor 602 reads the information in the second memory 603, and completes the steps of the aforementioned methods in combination with its hardware.

In an exemplary embodiment, the first base station 600 may be implemented by one or more ASICs, DSPs, PLDs, CPLDs, FPGAs, general-purpose processors, controllers, MCUs, microprocessors, or other electronic components, and is configured to perform the aforementioned method.

It can be understood that the memories (the first memory 503 and the second memory 603) of the embodiments of the present disclosure may be volatile memories or nonvolatile memories, or may include both volatile and nonvolatile memories. The non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc, or a compact disc read-only memory (CD-ROM). The magnetic surface memory may be a magnetic disk memory or a magnetic tape memory. The volatile memory may be a random access memory (RAM), which acts as an external cache. By way of example, but not by way of limitation, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a SyncLink dynamic random access memory (SLDRAM), and a Direct Rambus random access memory (DRRAM). The memories described in the embodiments of the present disclosure are intended to include, but are not limited to, the aforementioned and any other suitable type of memory.

In an exemplary embodiment, the embodiments of the present disclosure further provide a storage medium, i.e., a computer storage medium, specifically a computer-readable storage medium, for example, including the first memory 503 storing a computer program, wherein the computer program may be executed by the first processor 502 of the first terminal 500, so as to complete the steps of the method on the first terminal side. As another example, the storage medium includes the second memory 603 storing a computer program, wherein the computer program may be executed by the second processor 602 of the first base station 600, so as to complete the steps of the method on the first base station side. The computer-readable storage medium may be a memory such as a FRAM, a ROM, a PROM, an EPROM, an EEPROM, a flash memory, a magnetic surface memory, a compact disc, or a CD-ROM.

It should be noted that: "first," "second," and the like are used for distinguishing between similar objects and not necessarily for describing a particular sequential or chronological order.

The term "and/or" herein is merely to describe the associations of associated objects, indicating that there may be three kinds of relationships. For example, A and/or B may indicate three situations, i.e., A exists alone, A and B exist simultaneously, or B exists alone. In addition, the term "at least one" herein indicates any one of a plurality or any combination of at least two of a plurality. For example, at least one of A, B, or C may indicate any one or more elements selected from the group consisting of A, B, and C.

In addition, the technical solutions recited in the embodiments of the present disclosure may be arbitrarily combined as long as they do not conflict with each other.

The foregoing are merely preferred embodiments of the present disclosure, and are not intended to limit the scope of protection of the present disclosure.

## Claims

1. An information reporting method, applied to a first terminal, the method comprising:
sending a first message to a first base station; wherein
the first message carries information related to a handover performed by the first terminal based on a layer-1 or layer-2 or layer-3 measurement result.

2. The method according to claim 1, wherein the first message is sent when or after a first event occurs, and the first event comprises at least one of the following:
a handover success;
a radio link failure (RLF);
random access;
a conditional handover; or
a dual stack handover.

3. The method according to claim 1, wherein the first message comprises at least one of the following:
a measurement report, a handover success message, an RLF message, or a random access report.

4. The method according to claim 1, wherein the information carried in the first message comprises at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating a number of times for which the layer-1 or layer-2 measurement result satisfies a corresponding handover threshold;
a first duration indicating a duration in which the layer-1 or layer-2 measurement result satisfies the corresponding handover threshold;
a second duration indicating a duration between the first time the layer-1 or layer-2 measurement result satisfies the corresponding handover threshold and an occurrence of an RLF; or
a second number of times indicating a number of times for which the layer-1 or layer-2 measurement result satisfies the corresponding handover threshold within the second duration.

5. The method according to claim 1, further comprising:
receiving a second message sent by the first base station, wherein
the second message carries information indicating a layer-1 and/or layer-2 measurement configuration.

6. The method according to claim 5, wherein the second message comprises a radio resource control (RRC) message.

7. The method according to claim 5 or 6, wherein the information carried in the second message comprises at least one of the following:
a layer-1 or layer-2 measurement object, comprising a frequency and/or a cell to be measured;
indication information for a terminal to report the layer-1 or layer-2 measurement result;
a handover configuration based on the layer-1 or layer-2 measurement result; or
configuration information of at least one candidate cell.

8. The method according to claim 7, wherein the handover configuration based on the layer-1 or layer-2 measurement result comprises at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

9. The method according to claim 1, further comprising:
performing a handover based on the layer-1 or layer-2 measurement result.

10. A measurement configuration method, applied to a first base station, the method comprising:
receiving a first message sent by a first terminal, wherein
the first message carries information related to a handover performed by the first terminal based on a layer-1 or layer-2 or layer-3 measurement result.

11. The method according to claim 10, wherein the first message comprises at least one of the following:
a measurement report, a handover success message, an RLF message, or a random access report.

12. The method according to claim 10, wherein the information carried in the first message comprises at least one of the following:
the layer-1 or layer-2 measurement result;
the layer-3 measurement result;
information indicating that the handover is triggered based on the layer-1 or layer-2 measurement result;
information indicating that the handover is triggered based on the layer-3 measurement result;
a first number of times indicating a number of times for which the layer-1 or layer-2 measurement result satisfies a corresponding handover threshold;
a first duration indicating a duration in which the layer-1 or layer-2 measurement result continuously satisfies the corresponding handover threshold;
a second duration indicating a duration between the first time the layer-1 or layer-2 measurement result satisfies the corresponding handover threshold and an occurrence of an RLF; or
a second number of times indicating a number of times for which the layer-1 or layer-2 measurement result satisfies the corresponding handover threshold within the second duration.

13. The method according to claim 10, further comprising:
sending a second message to the first terminal, wherein
the second message carries information indicating a layer-1 and/or layer-2 measurement configuration.

14. The method according to claim 13, wherein the second message comprises an RRC message.

15. The method according to claim 13 or 14, wherein the information carried in the second message comprises at least one of the following:
a layer-1 or layer-2 measurement object, comprising a frequency and/or a cell to be measured;
indication information for a terminal to report the layer-1 or layer-2 measurement result;
a handover configuration based on the layer-1 or layer-2 measurement result; or
configuration information of at least one candidate cell.

16. The method according to claim 15, wherein the handover configuration based on the layer-1 or layer-2 measurement result comprises at least one of the following:
a handover threshold corresponding to layer 1 or layer 2;
a third number of times indicating the first terminal to trigger a handover when a number of times for which the layer-1 or layer-2 measurement result satisfies the corresponding handover threshold reaches the third number of times; or
a third duration indicating the first terminal to trigger a handover when a duration in which the layer-1 or layer-2 measurement result satisfies the corresponding handover threshold reaches the third duration.

17. An information reporting apparatus, comprising:
a first sending unit, configured to send a first message to a first base station, wherein
the first message carries information indicating that a first terminal performs a handover based on a layer-1 or layer-2 or layer-3 measurement result.

18. A measurement configuration apparatus, comprising:
a first receiving unit, configured to receive a first message sent by a first terminal, wherein
the first message carries information related to a handover performed by the first terminal based on a layer-1 or layer-2 or layer-3 measurement result.

19. A first terminal, comprising: a first processor and a first communication interface, wherein
the first communication interface is configured to send a first message to a first base station, wherein
the first message carries information indicating that the first terminal performs a handover based on a layer-1 or layer-2 or layer-3 measurement result.

20. A first base station, comprising: a second processor and a second communication interface, wherein
the second communication interface is configured to receive a first message sent by a first terminal, wherein
the first message carries information related to a handover performed by the first terminal based on a layer-1 or layer-2 or layer-3 measurement result.

21. A first terminal, comprising: a first processor and a first memory configured to store a computer program runnable by a processor,
wherein the first processor is configured to, when running the computer program, perform the steps of the method according to any one of claims 1 to 9.

22. A first base station, comprising: a second processor and a second memory configured to store a computer program runnable by a processor,
wherein the second processor is configured to, when running the computer program, perform the steps of the method according to any one of claims 10 to 16.

23. A storage medium, having a computer program stored thereon, wherein when executed by a processor, the computer program implements the steps of the method according to any one of claims 1 to 9, or implements the steps of the method according to any one of claims 10 to 16.
